Europäisches Patentamt

European Patent Office

Office européen des brevets

(11) Publication number: **0 068 851**
A1

(12) **EUROPEAN PATENT APPLICATION**

(21) Application number: 82303341.0

(22) Date of filing: 25.06.82

(51) Int. Cl.³: **C 08 K 5/13**, C 08 L 23/02, C 08 F 6/02

(30) Priority: 01.07.81 US 279624

(71) Applicant: **UNION CARBIDE CORPORATION, Old Ridgebury Road, Danbury Connecticut 06817 (US)**

(43) Date of publication of application: 05.01.83
**Bulletin 83/1**

(72) Inventor: **Corwin, Michael Allen, 194 Old Forge Road, Millington New Jersey 07946 (US)**
Inventor: **Foster, George Norris, 250-0 Turkey Hill Road, Bloomsbury New Jersey 08804 (US)**

(74) Representative: **Baverstock, Michael George Douglas et al, BOULT, WADE & TENNANT 27 Furnival Street, London, EC4A 1PQ (GB)**

(84) Designated Contracting States: **BE DE FR GB IT SE**

(54) Metallic salts of hindered phenolic anti-oxidant as anti-gel component in transition metal-catalyzed olefin polymers containing halide residue.

(57) A non-volatile, metallic salt of a hindered phenolic anti-oxidant is added to a film- or molding-grade olefin polymer composition to prevent gel-streaking/pinstriping, oxidation and corrosion during film extrusion processes.

EP 0 068 851 A1

-1-

METALLIC SALTS OF HINDERED PHENOLIC ANTI-OXIDANT AS ANTI-GEL
COMPONENT IN TRANSITION METAL-CATALYZED OLEFIN POLYMERS CONTAINING
HALIDE RESIDUE

This invention relates to anti-gel compounds useful for reducing optical degradation phenomena in extruded olefin polymer film. The compounds also are useful for preventing corrosion during processing of olefin polymer film or molded articles.

Olefin polymers such polyethylene have been used for a number of years for the preparation of films by extrusion processes. Unlike high pressure, free radical polymerized polyethylenes, low pressure, low density polyethylenes prepared in the presence of transition metal catalysts e.g. the well known catalysts develop gel-like defects when extruded, for example as blown films. In a blown film process, polyethylene pellets or granules are melted and extruded from an annular die to form a film envelope. In the extruder and die system, there are typically "dead spots" or "hangup areas" where molten polyethylene does not move rapidly, resulting in long heat histories for portions of the melt. As portions of the polymer are flushed from these hangup areas, they cause optical degradation phenomena in the film, known as "pinstriping" and "gel streaking".

By "pinstriping" is meant here bands resulting from accumulations of micro-gels which are aligned in the machine direction during the film-forming process. By "gel-streaking" is meant surface roughness in the form of the inclusion, either singularly or in rows, of "v-shaped" gels ("arrowheads" or "chevrons"), streaks of soft gels, or, in extreme cases, a film texture completely permeated by soft gels. Such optical degradation phenomena not only detract from film optical and mechanical strength properties, but also can cause severe problems with respect to maintaining bubble geometry during the film-forming process.

Because of the fact that the extrusion processes usually involve the use of relatively high extrusion temperatures and prolonged extrusion times, in commercial practice, various anti-oxidants, such as hindered phenolics, are admixed with the transition metal catalyzed olefin polymer, containing halide residue to prevent undesirable degradation of the polymer during the preparation of the film. When such anti-oxidants are used, however, with the film-forming grades of olefin polymers in certain types of extrusion equipment, the anti-oxidants appear to enhance, if not create, gel-streaking and pinstriping in the products thus formed, as well as corrosion of the extrusion equipment.

Many solutions have been proposed to eliminate problems caused by transition metal catalyst halide, for example the Ziegler-Natta catalyst chloride residue, such as discoloration, lack of stability, equipment corrosion, gel-streaking and pinstriping. For example, it is known to remove physically the halide catalyst residue, prior to extrusion, by leaching the reaction product of polymer and catalyst with alcohols, aqueous acid, water, or treating the polymer and catalyst with propylene oxide followed by an alcohol or water wash. Such treatments usually produce white polymers initially, but a yellow or tan color returns when the polymers are subjected to molding and/or heating operations. In order to avoid this undesirable color formation, it is usually necessary to use a second or even a third clean-up procedure requiring the use of large quantities of deactivating materials. Another practice in the art involves drying the after-treated polymer prior to fabrication. Because they usually must be repeated several times in order to obtain a polymer having acceptable color upon exposure to heat, such clean-up procedures are both expensive and time-consuming. Illustrative of such prior art treatments are those disclosed in U.S. -A- 3,925,341; 3,962,199; 3,247,351; 4,029,877; 4,117,219; 3,299,027; 3,923,760; 3,308,105; and 4,098,990.

Other treatments disclosed in the prior art involve the addition of compounds to the polymer prior to fabrication in order to complex with the harmful components in the catalyst residue and deactivate them. Illustrative of these prior art treatments are those disclosed in Canadian -A- 961,998, U.S. -A- 4,013,622 and in U.S. -A- 3,773,743.

For example, U.S. -A- 3,773,743 discloses a method for improving the stability and color of olefin polymers by deactivating their Ziegler-Natta catalyst residues. This method involves high temperature (190°C-250°C) processing with hydroxyl compounds ($H_2O$ and primary alcohols) and with an organic base such as an alkyl amine; aryl amine; Li, Ca and Zn salts of carboxylic acids; trialkyl phosphites; and metal alkoxides. The concentration disclosed for the hydroxy source is the range of 0.5 to 1.5 weight percent and a concentration of 50 to 2500 parts per million (ppm) is disclosed for the organic base. At the processing temperatures disclosed, some of the organic bases and the hydroxy sources would be volatile and cause foaming of the product if the processing were not done in a way to remove volatiles, e.g., as in devolatilizing extruders.

In high temperature processing of Ziegler-Natta catalyzed olefin polymer resins, such as in slot cast or blown film extrusion, or in molding processes, it has been observed that the chloride catalyst residue present in the resins may cause corrosion of the processing equipment. For example, corrosion pitting has been observed on both the chill roll and internal adaptor as well as on die surfaces during slot cast film extrusion. Internal adaptor and die surfaces of blown film extrusion equipment also are subject to corrosion. Surfaces of molds are also subject to mold staining and pitting. Deactivation of the chloride catalyst residue is required in a costly separate step prior to processing of the resin.

An object of the present invention is to seek to provide a film-forming extrudable composition comprising a transition metal catalyzed-olefin polymer and a metallic salt derived from a hindered phenolic anti-oxidant, and an extruded film made from such extrudable composition, which film is free from gel-streaking.

A further object of the present invention is to seek to provide a process wherein transition metal-catalyzed olefin polymer film-forming compositions containing halide residue and containing a metallic salt derived from a hindered phenolic anti-oxidant may be extruded without optical degradation phenomenon appearing within the extruded film.

Another object of the present invention is to seek to provide a metallic phenolate salt anti-gel compound, which when added to transition metal-catalyzed olefin polymer containing halide residue is useful in removing or reacting with the halide residue in said olefin polymers under extrusion conditions to prevent gel-streaking or pinstriping from occurring in subsequent extrusion process.

An additional object of the present invention is to seek to provide a masterbatch concentrate which can be admixed with a transition metal-catalyzed olefin polymer containing halide residue to provide the extrudable film-forming composition of this invention.

Another object of the present invention is to seek to provide an improved method of deactivating a halide catalyst residue in a process for producing an extruded film, sheet or molded article from a transition metal catalyzed olefin polymer composition which method comprises adding to said olefin polymer composition a metallic salt derived from a hindered phenolic anti-oxidant, which process is substantially free from corrosion.

This invention is based on the discovery that optical degradation phenomena, known as gel-streaking and pinstriping, present in extruded transition metal catalyzed olefin polymer, containing halide residue can be substantially prevented through the addition of small amounts of a metallic phenolate salt derived from a hindered phenolic anti-oxidant of relatively low volatility. The presence of such metallic phenolate salt also is believed to prevent or reduce corrosion of extrusion processing equipment. The metallic phenolate salt comprises an alkali metal phenolate salt, an alkaline earth metal phenolate salt, a zinc phenolate salt or mixtures thereof. According to the present invention, the incidence of gel-streaking or pinstriping in the film during the extrusion of an olefin polymer and corrosion of processing equipment is minimized through the use of a composition comprising:

a majority of a transition metal-catalyzed olefin polymer containing halide residue;
and

a minor amount of at least one metallic phenolate salt derived from hindered phenolic anti-oxidant as defined herein.

0068851

This invention also relates to an improved method of extruding a transition metal-catalyzed olefin polymer containing catalyst residue which comprises extruding a film-forming composition containing a transition metal-catalyzed olefin polymer containing halide residues and minor amounts of at least one metallic salt derived from a hindered phenolic anti-oxidant.

Moreover, this invention relates to a masterbatch concentrate which may be admixed with a transition metal-catalyzed olefin polymer containing halide residues to yield the film-forming composition of this invention.

In one aspect, the present invention relates to an extrudable film-forming composition which, when extruded, forms a film essentially devoid of gel-streaking and pinstriping, the film-forming extrudable composition comprising a transition metal-catalyzed olefin polymer containing halide residue and a metallic phenolate salt derived from a hindered phenolic anti-oxidant. Preferably, the olefin polymer is prepared using a Ziegler-Natta catalyst. The olefin polymer contains chloride catalyst residue from the Ziegler-Natta catalyst. The metallic phenolate salt is present in an amount sufficient to neutralize the Ziegler-Natta chloride residue and serve as an anti-gel compound. The hindered phenolic anti-oxidant is partly reformed to prevent oxidation of the film during extrusion processing and subsequent storage thereof.

The amount of metallic phenolate salt necessary to neutralize the chloride catalyst residue should be greater than about 5 times, preferably greater than about 10 times, and most preferably greater than about 20 times the amount of chloride catalyst residue present. When the ratio becomes too high, particularly at the higher chloride catalyst levels, e.g., at 200 ppm chloride catalyst residue, the metallic phenolate salt can exude to the polymer air interface and adversely affect olefin polymer surface properties such as sealing, treatability and coefficient of friction. Below a 5 to 1 ratio, the amount of metallic phenolate salt may not be sufficient to neutralize the chloride catalyst residue to retard gel-streaking, etc.

The residues of Ziegler-Natta catalysts include trace amounts of magnesium, titanium, aluminum and chlorine. By chloride catalyst residues, as used herein, is meant the chlorides of magnesium, titanium and aluminum present in a Ziegler-Natta catalyst residue. Chloride catalyst residue from a Ziegler-Natta catalyst is typically present in a concentration between 5 and 500 ppm based upon the olefin polymer. Chloride catalyst residue concentrations between 5 and 50 ppm are typical for ethylene polymer and chloride catalyst residue concentrations between 10 and 500 ppm are typical for propylene polymer and butene polymer made with Ziegler-Natta catalysts.

Metallic phenolate salts derived from hindered phenolic anti-oxidants in a concentration of 20 to 1000 ppm may be added to ethylene polymer compositions according to the present invention. And concentrations of 200 to 5000 ppm of metallic phenolate salts derived from hindered phenolic anti-oxidant may be added to propylene polymer or butene polymer compositions.

In another aspect, the present invention relates to a process for extruding a film-forming olefin polymer based composition into film essentially free from gel-streaking and pinstriping. The polymer-based composition comprises a Ziegler-Natta catalyzed film-grade olefin polymer which contains a chloride residue in the range of between 5 and 500 ppm and at least one metallic phenolate salt derived from a hindered phenolic anti-oxidant in the range of between 20 and 5000 ppm. The olefin polymer-based composition is

BAD ORIGINAL

-8-

susceptible to gel-streaking during formation of the film in the presence of a hindered phenolic anti-oxidant. This invention is based upon the discovery that such a process may be improved by extruding the olefin polymer-based composition into the film in the presence of a metallic phenolate salt derived from the hindered phenolic anti-oxidant, as described herein.

In still another aspect, it is believed that processing of Ziegler-Natta catalyzed olefin polymer (containing a chloride catalyst residue) into film can be accomplished without corrosion of the processing equipment by incorporating a metallic phenolate salt as defined herein into the olefin polymer composition to be processed. The concentration of the metallic phenolate salt required to prevent corrosion is between 25 and 10,000 ppm, based upon the olefin polymer.

The metallic phenolate salt is uniformly dispersed in the olefin polymer-based extrusion composition. The dispersion can be effected by various dispersion techniques commonly employed by those skilled in the art of preparing extrudable composition. The metallic phenolate salt could be introduced into the olefin polymer either by directly dry blending with a granular olefin polymer (e.g., polyethylene) via a V-type blender or by mixing via a Henschel type intensive mixer. The metallic phenolate salt also could be directly hot compounded into the olefin polymer or hot compounded to make a masterbatch for final letdown using conventional hot processing equipment such as a Banbury mixer, a Werner Pfleiderer twin screw mixing extruder or a single screw mixer extruder that has pelletization equipment on the head of the extruder.

## The Metallic Phenolate Salt

The metallic phenolate salts which may be employed in the compositions of the present invention include a metallic salt of all those hindered phenolic anti-oxidants commonly employed in olefin polymer-based film extrusion compositions. These metallic phenolate salts, on reaction with a chloride catalyst residue, provide anti-oxidant protection at processing temperatures of the order of from 135°C to 340°C, or higher.

The metallic phenolate salts derived from hindered phenolic anti-oxidants may be used individually or in various combinations with one another or with secondary anti-oxidant stabilizers in the compositions of the present invention.

The metallic phenolate salt comprises an alkali metal phenolate salt, an alkaline earth metal phenolate salt, a zinc phenolate salt or mixtures thereof as cations.

Suitable alkali metals include sodium, potassium or mixtures thereof as cations.

Suitable alkaline earth metals include calcium, magnesium, barium or mixtures thereof as cations.

Suitable metallic phenolate salts include the above cations with the following hindered phenolic anti-oxidants providing the anion:

p-hydroxyphenylcyclohexane; di-p-hydroxyphenylcyclohexane dicresylolpropane; tertiary butyl para cresol; 2,6-di-tert-butyl-p-cresol; 2,4,6-tri-tert-butylphenol; octadecyl-3-(3',5'-di-tert-butyl-4'-hydroxyphenol)propionate; tetra bis[methylene 3-(3',5'-di-tert-butyl-4'-hydroxyphenol)propionate]methane; 2,2' ethylidene bis (4,6-di-tert-butylphenol); 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; and bis-[3,3-bis-4'-hydroxy-3'-tert-butyl-phenyl)-butanoic acid]-glycol ester, condensation products of dialkylphenols with formaldehyde, reaction products of phenol with styrene, 1,1'-methylene-bis(4-hydroxy-3,5-tert-butylphenol), 2,2'-methylene-bis-(4-methyl-6-tert-butylphenol), 2,6-(2-tert-butyl-4-methyl-6-methylphenol)-p-cresol, phenylethyl-pyrocatechol, phenolisopropylpyrocatechol, 1,1,3-tris(2'-methyl-3'-t-butyl-4-hydroxy phenol)butane, 2,2-methylene-bis[6-$\alpha$-methylcyclohexyl)-4-methylphenol], 1,3,5-trimethyl-2,4,6-tris-(3',5'-di-t-butyl-4-hydroxybenzyl)benzene and $\alpha$-napthol; and sulfur containing compounds such as 2,2'-thio-bis-(4-methyl-6-tert-butylphenol), 4,4-thio-bis(3-methyl-6-tert-butylphenyl).

### Olefin Polymers

The extrudable olefin polymers employed in the extrudable compositions of the present invention are normally solid materials, that is, solid at room temperature. Any extrusion-grade olefin polymer can be used in the compositions of the present invention. The term "olefin polymer" thus includes homopolymers of the olefins, as well as interpolymers of one or more olefins with each other, and/or up to about 30 weight percent of one or more monomers which are copolymerizable with such olefins. The olefins such as ethylene, propylene, butene-1, isobutylene, pentene-1, 4-methyl-pentene-1, hexene-1, octene-1, nonene-1, decene-1, as well as interpolymers of one or more of such olefins and one or more other monomers which are interpolymerizable with such olefins, such as other vinyl and diene compounds, i.e., those having the group $-\overset{|}{C}=\overset{|}{C}-$.

Preferred copolymers are the ethylene copolymers such as ethylene/propylene copolymers, ethylene/butene-1 copolymers, ethylene/pentene-1 copolymers, ethylene/4-methyl-pentene-1 copolymers, ethylene/hexene-1 copolymers, and octene-1 copolymers.

Preferred ethylene interpolymers would include two or more of the following: propylene, butene-1, pentene-1, hexene-1, 4-methyl-pentene-1 and octene-1. Preferred propylene interpolymers would include ethylene, butene-1, pentene-1, hexene-1, 4 methyl-pentene-1 and octene-1 as monomers. Preferred butene-1 interpolymers would include ethylene, propylene, hexene-1, 4-methyl-pentene-1 and octene-1 as monomers.

Also included in the term polymer are blends of one polymer with one or more other polymers. Illustrative of such blends are ethylene polymers with one or more of the following: polypropylene, high pressure, low density polyethylene, high density polyethylene, polybutene-1, and polar monomer containing olefin copolymers such as ethylene/acrylic acid copolymers, ethylene/methyl acrylate copolymer, ethylene/ethylacrylate copolymer, ethylene/vinyl acetate copolymer, ethylene/acrylic acid/ethyl acrylate terpolymer, and ethylene/acrylic acid/vinyl acetate terpolymer.

Also included within the term polar monomer containing olefin copolymers are the metallic salts of those olefin copolymers, or blends thereof, which contain free carboxylic acid groups. Illustrative of such polymers are ethylene/acrylic acid copolymer, ethylene/methacrylic acid, oxidized polyolefins, propylene/acrylic acid copolymer, and butene/acrylic acid copolymer.

Illustrative of the metals which can be used to provide the salts of said carboxylic acid polymers are the one, two and three valence metals, such as sodium, lithium, potassium, calcium, magnesium, aluminum, barium, zinc, zirconium, beryllium, iron, nickel, and cobalt.

The preferred olefin polymers for use in the present

invention are polymers of ethylene, and the most preferred polymers are those having a melt index of from 0.1 to 10 grams per 10 minutes, a density of from 0.910 to 0.955. Low density ethylene polymer has a density of between 0.910 and 0.925, medium density ethylene polymer has a density of between 0.925 and 0.940, and high density ethylene polymer has a density of between 0.940 and 0.970. Thus, the low density ethylene copolymers are the most preferred olefin polymers to be used in the present invention, although the medium and high density polymers may also be used.

Preferred low pressure, low density ethylene copolymers for use in the present invention include those which may be produced in accordance with the procedures set forth in U.S. Patent Application Serial No. 892,325, filed March 31, 1978, and refiled as Serial No. 014,414 on February 27, 1979, in the names of F.J. Karol et al. and entitled "Preparation of Ethylene Copolymers in Fluid Bed Reactor", and the procedures set forth in U.S. Patent Application Serial No. 892,322, filed March 31, 1978, and refiled as Serial No. 012,720 on February 16, 1979, in the names of C.L. Goeke et al. and entitled "Impregnated Polymerization Catalyst, Process for Preparing, and Use for Ethylene Copolymerization" as well as procedures which will produce ethylene hydrocarbon copolymers with properties as heretofore described. U.S. Application Serial No. 014,414 corresponds to European Patent Application No. 79100953.3 which was opened to the public on October 17, 1979 as Publication No. 4645 and U.S. Application Serial No. 012,720 corresponds to European Patent Application No. 79100958.2 which was opened to the public on October 17, 1979 as Publication No.

4647. The disclosures of Publications Nos. 4645 and 4647 are incorporated herein by reference.

Other low pressure, low density ethylene polymers preferred for use in the present invention are those which may be prepared as described in U.S. -A- 4,011,382, entitled "Preparation of Low and Medium Density Ethylene Polymer in Fluid Bed Reactor" by I.J. Levine et al., the disclosure of which is incorporated herein by reference.

The olefin polymers may be used in the form of powders, pellets, granules, or any other form that can be fed to an extruder.

### The Anti-Oxidants

As noted above, the metallic phenolate salts function as anti-gel agents and on reaction with the Ziegler-Natta chloride residue, generate their respective hindered phenolic anti-oxidants. The extrudable compositions of the present invention contain at least one metallic phenolate salt anti-oxidant as defined herein for the olefin polymer, and optionally contain a primary hindered phenolic anti-oxidant and/or other secondary anti-oxidant. The metallic phenolate salt and any other primary anti-oxidants are present in stabilizingly effective quantities. Such amounts are from 0.002 to 0.5, and preferably from 0.01 to 0.05, percent by weight, based on the weight of the olefin polymer.

Hindered phenolic anti-oxidants useful in this invention include: p-hydroxyphenylcyclohexane; di-p-hydroxyphenylcyclohexane dicresylolpropane; tertiary butyl para cresol; 2,6-di-tert-butyl-p-cresol; 2,4,6-tri-tert-butylphenol; octadecyl-3-(3,5-di-tert-butyl-4-hydroxyphenyl)propionate; tetra bis[methylene 3-(3',5'-di-tert-butyl-4'-hydroxyphenyl)propionate]methane;

-14-

2,2' ethylidene bis(4,6-di-tert-butylphenol); 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; and bis-[3,3-bis-4'-hydroxy-3'-tert-butyl-phenyl)-butanoic acid]-glycol ester, condensation products of dialkylphenols with formaldehyde, reaction products of phenol with styrene, 1,1'-methylene-bis(4-hydroxy-3,5-tert-butylphenol), 2,2'-methylene-bis-(4-methyl-6-tert-butylphenol), 2,6-(2-tert-butyl-4-methyl-6-methylphenol)-p-cresol, phenylethyl-pyrocatechol, phenolisopropylpyrocatechol, 1,1,4-tris(2'-methyl-5'-t-butyl-4-hydroxy phenol)butane, 2,2-methylene-bis[6-(α-methylcyclohexyl)-4-methylphenol], 1,3,5-trimethyl-2,4,6-tris-(3',5'-di-t-butyl-4-hydroxybenzyl)benzene and α-naphthol; and sulfur containing compounds such as 2,2'-thio-bis-(4-methyl-6-tert-butylphenol), and 4-4'-thio-bis-(3-methyl-6-tert-butylphenyl)

The preferred primary or hindered phenolic compounds suitable for making phenolate salts employed in the compositions of the present invention are 2,6-ditertiary butyl paracresol, or butylated hydroxy toluene (BHT); octadecyl-3-(3,5-di-tert-butyl-4-hydroxy phenyl)propionate (Irganox 1076); or tetra-bis[methylene 3-(3',5'-di-tert-butyl-4'-hydroxyphenyl)propionate]methane; 2,2' ethylidene bis (4,6-di-tert-butylphenol) (Isonox 129); or 1,3,5-tris(4-tert-butyl-3-hydroxy-2,6-dimethylbenzyl)-1,3,5-triazine-2,4,6-(1H,3H,5H)-trione (Cyanox 1790).

Preferred secondary anti-oxidant stabilizers include dilauryl thiodipropionate (DLTDP); distearyl thiodipropionate (DSTDP); tri(mixed mono and dinonyl phenyl)phosphite (Polygard); di-stearyl-pentaerythritol-diphosphite (Weston 618); tri(2,4-di-tert-butylphenyl)phosphite (Mark 2112); bis (2,4-di-tert-butylphenyl) pentaerythritol diphosphite (Weston XP-1532); or tri(nonylphenol)phosphite (Weston 399, TNPP).

### Masterbatch Concentrate

As previously described herein, the metallic phenolate salts of this invention may be admixed with a transition metal-catalyzed olefin polymer containing halide residue via a masterbatch concentrate to yield the extrudable film-forming composition of this invention. The transition metal-catalyzed olefin polymer preferably a Ziegler Natta catalyzed polymer typically is admixed with the masterbatch concentrate in a letdown ratio of between 5 and 100 to 1 by weight. Preferably, a letdown ratio of between 5 and 30 to 1 by weight is employed.

The masterbatch concentrate is comprised of between 40% and 98% by weight, preferably between 60% and 95% by weight, of an olefin polymer compatible with the Ziegler-Natta catalyzed olefin polymer with which the masterbatch concentrate is admixed. Compatibility of the olefin polymer can be judged by the general quality of the extruded film product in terms of the increased presence of haze, gel-like defects or gross distortions of the surface texture, commonly referred to as an "applesauce" or "sharkskin-like" surface.

The masterbatch concentrate further includes between 0.1% and 5% by weight of a metallic phenolate salt used in this invention; optionally between 0.1% and 5% by weight of a primary hindered phenolic anti-oxidant and/or a secondary anti-oxidant; and between 2% and 48% by weight, preferably between 3% and 20% by weight, of an inorganic anti-block compound.

### Extrudable Compositions

The extrudable compositions of the present invention may be used in any of the forms of such compositions which are commonly employed in the extruded film arts, such as compounds modified with various slip agents such as fatty acid amides, anti-static and anti-block additives for specific end use applications.

These extrudable compositions are thermoplastic in nature. In addition to the olefin polymer, metallic phenolate salt, and primary and secondary anti-oxidants, the compositions of the present invention may contain other adjuvant materials which are commonly employed in olefin polymer-based extrudable film compositions. Such other adjuvants would include plasticizers, fillers, pigments, lubricants, slip agents, modifiers and similar materials.

The fillers which may be used in the olefin polymer-based extrudable compositions of the present invention are the fillers which are commonly used with such polymers. The fillers are used in amounts which correspond from 1 to 20 percent by weight, based on the weight of the olefin polymer. Such fillers would include materials such as carbon black, titanium dioxide, clays, diatomaceous earth, calcium silicates and others known in the art.

The lubricants which are commonly employed in the olefin polymer-based extrudable compositions are the lubricants which are commonly used with such polymers. The lubricants are used in amounts which correspond from 0.02 to 0.2 percent by weight of lubricant agent based on the weight of the olefin polymer. Examples of such lubricants are fatty acid amides such as stearamide, oleamide, behenamide and erucamide.

-17-

## Extruding Conditions

The extrudable conditions of the present invention are particularly designed for use in equipment utilized for tubular film, cast film and extrusion coating products. Such equipment may have hold-up areas or areas of stagnation that retard the flow of extrudate therethrough, leads to the development of gel-streaking and pinstriping in the absence of the use of the anti-gel additives of the present invention. In such equipment the olefin polymer based extrudable compositions are subjected to extrusion temperatures of from 135°C to 340°C, and preferably from 190°C to 340°C, under varying conditions of heat and pressure, and for periods of time of from 0.5 to 10 minutes.

The film is usually prepared in sheets which are from 2.5 μm to 250 μm thick.

According to the present invention, the olefin polymer compositions are not exposed to post-reactor high temperature compounding or finishing which could introduce hydroperoxides into the composition prior to film extrusion. Instead the metallic phenolate salt is added via a masterbatch concentrate or by directly dry blending it into the granular olefin polymer prior to extrusion thereof. Another advantage of this invention is that gas treatment (e.g., with propylene oxide) after polymerization of the olefin polymer is not required nor are subsequent alcohol washes required to remove the propylene oxide or ethylene oxide gas products nor the subsequent drying process to remove the alcohol. Also unnecessary is the need for devolatilization of alcohols or water which could be added to neutralize the break down catalyst residue.

-18-

Another advantage of the present invention is that the metallic phenolate salts may be incorporated into the olefin polymer-based resin composition without adversely affecting other additives normally used in such compositions such as slip/anti-block materials such as fatty amides, silica or calcium carbonate. The metallic phenolate salts do not adversely interact with these other additives.

Still another advantage of the present invention relates to molding and extrusion processing of Ziegler-Natta-catalyzed olefin polymer. The (Ziegler-Natta) catalyst residue, primarily chlorides present in such olefin polymers, is liberated as hydrogen chloride during such processing. The liberated hydrogen chloride can cause removal of chrome-plating or corrosion of equipment, both in the adaptor and die sections, as well as on the chill rolls used in high temperature slot cast film extrusion. The hydrogen chloride also will adversely affect the metal and chrome-plated surfaces in blow molding and injection molding equipment. The metallic phenolate salts of this invention are believed to neutralize the chloride catalyst residues and consequently prevent adverse corrosion effects in processing equipment or on a chill roll. The solubility of the metallic phenolate salts in the olefin polymers enables them to reach the catalyst sites to break down and neutralize the chloride residue.

The following Examples are illustrative of the present invention and are not intended as a limitation of the scope thereof

## Example 1

### Preparation of Metallic Phenolate Salts

The metallic phenolate salts are prepared by dissolving a primary hindered phenolic anti-oxidant in 50 ml of acetone. A metallic cation is provided by adding alkali, alkaline and zinc metallic oxides or suitable alkanolates to the dissolved anti-oxidant. The metallic oxides are added in 100% excess by using 2 equivalence of metallic oxide to each equivalence of primary hindered phenolic anti-oxidant. The alkali, alkaline and zinc metallic alkanolates are used at a 25% excess on a equivalence basis. The admixture is stirred under an inert gas (argon flow) at 50°C for a period of four hours under reflux, at which time, the means of refluxing is removed, and the acetone is evaporated to dryness under the argon flow. This drying process takes an additional 20 hours. The dry material is ground to a powder, immediately weighed and then added to the Ziegler-Natta catalyzed olefin polymer by dry blending with granular olefin polymer. Alternately, the metallic phenolate salts can be prepared by reaction of a primary hindered phenolic anti-oxidant with alkali, alkaline or zinc alkyls.

### Preparation of Polymer Resins

Two low pressure, low density ethylene-butene-1 copolymers are prepared according to the procedure disclosed in South African Patent Publication No. 79-01365, published September 22, 1980, entitled "Process for Making Film From Low Density Ethylene Hydrocarbon Copolymer" by W.A. Fraser et al. The properties of the ethylene-1 butene-1 copolymers are determined by the following methods:

Density is determined according to ASTM D-1505. A

-20-

plaque is conditioned for one hour at 100°C to approach equilibrium crystallinity. Density is reported as gms/cm$^3$.

Melt Index (MI) is determined according to ASTM D-1238, Condition E. It is measured at 190°C and 303 kPa and reported as grams/10 minutes.

Flow Index (MLMI) is measured according to ASTM D-1238, Condition F. It is measured at 10 times the weight used in the melt index test above and reported as grams per 10 minutes.

Melt Flow Ratio (MFR) is calculated as Flow Index/Melt Index.

Ti, Mg, Al and Si catalyst residues in the ethylene-butene-1 copolymer in ppm is measured by induction coupled plasma emission spectroscopy.

Cl catalyst residue in the ethylene-butene-1 copolymer in ppm is measured by a Cohrmann micro-coulometric titration system.

One of the ethylene-butene-1 copolymers, designated A, has the following properties: a melt index of 1.0; a MFR of 28; a density of 0.918 gm/cm$^3$; and a catalyst residue in ppm of Ti-2, Mg-2, Al-73, Si-56 and Cl-13.

The other ethylene-butene-1 copolymer, designated B, has the following properties: a melt index of 2.0; a MFR of 28; a density of 0.918 gm/cm$^3$; and a catalyst residue in ppm of Ti-3, Mg-4, Al-89, Si-97 and Cl-16.

Either polymer A or polymer B was is in the polymer compositions of all the subsequent illustrative examples herein.

Preparation of Polymer Compositions

One of two methods to prepare polymer compositions is employed in the examples. In one method, the components are dry blended in a roll drum for 20 minutes at room temperature with a virgin olefin polymer. In the other method, the components are compounded into masterbatch concentrates utilizing a Haake batch mixer. The components are mixed in the Haake mixer for 4 to 5 minutes, with a compound temperature approaching 125°C. After 5 minutes, the material is removed from the mixer and immediately pressed into a 50 mil sheet in a steam heated Wabash hydraulic press. Thereupon, the sheet is granulated in a Cumberland grinder. The base resin contained in the ground sheet (the masterbatch concentrate) is a high pressure, low density ethylene polymer having a melt index of 2.0 and a density of 0.918 gm/cm$^3$ (commercially available under the trade name DFD 4140 from Union Carbide Corporation, Old Ridgebury Road, Danbury, Connecticut 06810). This high pressure, low density polyethylene is designated as Polymer C in Table I. Two masterbatch concentrates are prepared and their compositions are set forth in Table I below:

TABLE I

| Masterbatch Concentrate No. | Composition | Concentration (Weight %) |
|---|---|---|
| 1 | Polymer C | 98.7 |
| | Zinc salt of octadecyl 3-(3',5'-di-tert-butyl-4'-hydroxyphenyl)propionate | 1.0 |
| | Octadecyl 3-(3',5'-di-tert-butyl-4'-hydroxyphenyl) propionate | 0.3 |
| 2 | Polymer C | 87.1 |
| | Zinc salt of octadecyl 3-(3',5'-di-tert-butyl-4'-hydroxyphenyl)propionate | 1.0 |
| | Octadecyl 3-(3',5'-di-tert-butyl-4'-hydroxyphenyl) propionate | 0.3 |

-22-

## TABLE I (cont'd)

| Masterbatch Concentrate No. | Composition | Concentration (Weight %) |
|---|---|---|
| 2 (cont'd) | Finely divided diatomaceous earth fluxed with sodium carbonate, having an average particle size of about 6 um and a pH of about 10 | 10.0 |
| | Erucamide | 1.6 |

The measurement of pH of the anti-block compound used in the masterbatch concentrates of Table I is done using the following procedure. 20 grams of the inorganic anti-block compound was placed in a 200 ml glass beaker with 100 ml of distilled water. The mixture is magnetically stirred for 30 minutes and then the anti-block compound is allowed to settle from the slurried mixture. The pH of the settled water slurry is measured using litmus paper capable of discerning pH values in the 4 to 12 range.

A series of experiments are run to demonstrate the effectiveness of the use of a metallic phenolate salt derived from a hindered phenolic anti-oxidant in olefin polymer based film extrusion compositions in order to prevent the formation of gel streaks/pinstriping in the extruded film. Table II below summarizes typical results for a number of control formulations which do not contain the metallic phenolate salt anti-gel/anti-oxidant compound of this invention. The control formulations are prepared by the method described hereinabove. After the formulations are prepared, films are extruded in a tubular extrusion device for various periods of time to assess gel formation. The film is extruded at 3 lbs/hr with a 385°F melt temperature using a 1-inch Killion 24 to 1 length to diameter extruder equipped with a 1 1/4-inch die with a 0.30

-23-

inch gap. No nitrogen purge is used on the extrusion hopper.

The extrusion films are approximately 1.5 mils thick. During extrusion, the films are examined periodically for gel streak formation and pinstriping. Table II hereinbelow sets forth the polymer compositions that are employed and the results that are obtained with respect to gel streak formation/pinstriping. The number symbols used to designate the visual appearance of the film with respect to gel streaking/pinstriping have the following meanings:

0 - clear of gel streaking/pinstriping

1 - slight gel streaking/pinstriping

2 - moderate gel streaking/pinstriping

3 - severe gel streaking/pinstriping

A review of the information disclosed in Table I shows that the control formulations for runs 2-7 exhibit gel streaking/pinstriping in the extruded films in the presence of hindered phenolic anti-oxidants.

TABLE II

| Run | Formulation | Concentration (PPM) | Gel Streaking Rating | Pinstriping Rating |
|---|---|---|---|---|
| 1 | Olefin Polymer A | -- | 1 | 0 |
| 2 | Olefin Polymer A<br>Tetra-bis[mathylene 3-(3',5'-di-tert-butyl-4'-hydroxyphenyl)propionate] methane;<br>Sodium carbonate (NaOCH₃) | 200<br><br>200 | 3 | 3 |
| 3 | Olefin Polymer A<br>Octadecyl 3-(3',5'-di-tert-butyl-4'-hydroxyphenyl)propionate;<br>Zinc oxide (ZnO) | 200<br><br>200 | 3 | 2 |
| 4 | Olefin Polymer A<br>2,6-di-tert-butyl-para-cresol;<br>Zinc oxide (ZnO) | 200<br>200 | 3 | 3 |
| 5 | Olefin Polymer A<br>Octadecyl 3-(3',5'-di-tert-butyl-4'-hydroxyphenol)propionate;<br>Magnesium oxide (MgO) | 200<br><br>200 | 3 | 3 |
| 6 | Olefin Polymer A<br>Tetra-bis[methylene 3-(3',5'-di-tert-butyl-4'-hydroxyphenol)propionate methane;<br>Zinc oxide | 200<br><br>200 | 3 | 3 |
| 7 | Olefin Polymer A<br>1,3,5-tris(4-tert-butyl-3-hydroxy-2,6 dimethyl benzyl)-1,3,5-triazine-2,4,6-(1H, 3H, 5H)-trione;<br>Zinc oxide | 200<br><br>200 | 3 | 3 |

-24-

-25-

## Example 2

In another series of experiments, metallic phenolate salts of primary hindered phenolic anti-oxidants are added to formulations instead of the primary hindered phenolic anti-oxidants. The metallic phenolate salts not only prevent oxidation but also prevent the formation of gel streaks in the extruded film. The formulations are prepared according to the method previously described in example 1. The olefin polymer based composition is extruded at 23 lbs/hr with a 410°F melt temperature using a 1 1/2-inch diameter Sterling extruder equipped with a 3-inch diameter spiral die (60 mil gap). No nitrogen purge is used on the extruder hopper. The extruded films are approximately 1.5 mils thick. During extrusion, the films are examined periodically for gel streaking/pinstriping Table III below discloses control compositions for runs 8 and 17-20 and examples compositions for runs 9-16 and 21-22 that are employed and typical results obtained with respect to gel streak formation/pinstriping. The number symbols used have the same meaning previously given herein.

A review of the information disclosed in Table III shows that the addition of a metallic phenolate salt of a primary hindered phenolic anti-oxidant to the formulations completely, or at least substantially, prevents the formation of gel streaking/pinstriping in the extruded films.

TABLE II

| Run | Formulation | Concentration (PPM) | Gel Streaking Rating | Pinstriping Rating |
|---|---|---|---|---|
| 8 | Olefin Polymer B Octadecyl 3-(3',5'-tert-butyl-4'-hydroxyphenyl)propionate | 200 | 3 | 2 |
| 9 | Olefin Polymer B Zinc salt of octadecyl 3-(3',5'-tert-butyl-4'-hydroxyphenyl) propionate | 200 | 0 | 0 |
| 10 | Olefin Polymer B Calcium salt of octadecyl 3-(3',5'-di-tert-butyl-4'-hydroxyphenyl) propionate | 200 | 0 | 0 |
| 11 | Olefin Polymer B Magnesium salt of octadecyl 3-(3',5'-di-tert-butyl-4'-hydroxyphenyl) propionate | 200 | 0 | 0 |
| 12 | Olefin Polymer B Sodium hydroxide salt of di-tert-butyl-para-cresol | 200 | 1 | 2 |
| 13 | Olefin Polymer B Sodium methanolate salt of di-tert-butyl-para-cresol | 200 | 0 | 0 |
| 14 | Olefin Polymer B Zinc salt of Tetra-bis[methylene 3-(3',5'-di-tert-butyl-4'-hydroxyphenyl)propionate]methane | 200 | 0 | 0 |

TABLE II (continued)

| Run | Formulation | Concentration (PPM) | Gel Streaking Rating | Pinstriping Rating |
|---|---|---|---|---|
| 15 | Olefin Polymer B<br>Zinc salt of 1,3,5-trimethyl-2,4,6-tris(3,5-di-tert-butyl-4-hydroxybenzyl)benzene | 200 | 0 | 1 |
| 16 | Olefin Polymer B<br>Zinc salt of 1,3,5-tris(4-tert-butyl-3-hydroxy-2,6 dimethyl benzyl)-1,3,5-triazine-2,4,6-(1H, 3H, 5H)-trione | 200 | 1 | 2 |
| 17 | Olefin Polymer B<br>1,3,5-trimethyl-2,4,6-tris (3,5-di-tert-butyl-4-hydroxybenzyl)benzene | 200 | 3 | 3 |
| 18 | Olefin Polymer B<br>1,3,5-tris(4-tert-butyl-3-hydroxy-2,6-dimethyl benzyl)-1,3,5-triazine-2,4,6-(1H, 3H, 5H)-trione | 200 | 3 | 3 |
| 19 | Olefin Polymer B<br>Tetra-bis(methylene 3-(3',5'-di-tert-butyl-4'-hydroxyphenyl) | 200 | 3 | 3 |
| 20 | Olefin Polymer B<br>2,6-di-tert-butyl-para-cresol | 200 | 3 | 3 |
| 21 | Olefin Polymer B<br>Masterbatch Concentrate No. 1 | 50,000 | 1 | 1 |
| 22 | Olefin Polymer B<br>Masterbatch Concentrate No. 2 | 50,000 | 1 | 1 |

CLAIMS:

1. An extrudable film-forming composition which when extruded forms a film which is essentially devoid of gel-streaking and pinstriping, which film-forming composition comprises a transition metal-catalyzed olefin polymer containing a halide catalyst residue in a concentration between 5 and 500 ppm, and at least one metallic salt derived from a first primary hindered phenolic anti-oxidant, which metallic phenolate salt is present in a concentration between 20 and 5000 ppm, wherein the metallic phenolate salt concentration is sufficient to neutralize the halide catalyst residue by reacting therewith and regenerating the first primary hindered phenolic anti-oxidant, and wherein the metallic phenolate salt comprises an alkali metal phenolate salt, an alkaline earth metal phenolate salt, a zinc phenolate salt, or a mixture thereof.

2. A composition as claimed in claim 1 wherein the olefin polymer catalyst residue is a Ziegler-Natta-catalyzed olefin polymer containing chloride catalyst residue.

3. A composition as claimed in claim 1 or claim 2 wherein the alkali metal of the metallic phenolate salt is sodium, potassium, or a mixture thereof.

4.  A composition as claimed in claim 1 or claim 2 wherein the alkaline earth metal of the metallic phenolate salt is calcium, magnesium, barium, or a mixture thereof.

5.  A composition as claimed in any one of the preceding claims wherein the first primary phenolic anti-oxidant comprises: p-hydroxyphenylcyclohexane; di-p-hydroxyphenylcyclohexane dicresylolpropane; tertiary butyl para cresol;2,6-di-tertbutyl-p-cresol;2,4,6-tri-tert-butylphenol;octadecyl-3-(3,5-di-tert-butyl-4-hydroxyphenyl)propionate; tetra bis[methylene 3-(3',5'-di-tert-butyl-4'-hydroxyphenyl)propionate]methane; 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; bis-[3,3-bis-4'-hydroxy-3'-tert-butyl-phenyl)-butanoic acid]-glycol ester; condensation products of dialkylphenols with formaldehyde; reaction products of phenol with styrene; 1,1'-methylene-bis(4-hydroxy-3,5-tert-butylphenol); 2,2'-methylene-bis-(4-methyl-6-tert-butylphenol); 2,6-(2-tert-butyl-4-methyl-6-methylphenol)-p-cresol; phenylethyl-pyrocatechol; phenolisopropylpyrocatechol; 1,1,3-tris(2'-methyl-5'-t-butyl-4-hydroxy phenol)butane; 2,2-methylene-bis[6-(ð-methylcyclohexyl)-4-methylphenol]; 1,3,5-trimethyl-2,4,6-tris-(3',5'-di-t-butyl-4-hydroxybenzyl)benzene and ð-naphthol; 2,2'-thio-bis-(4-methyl-6-tert-butylphenol); or 4-4'-thio-bis-(3-methyl-6-tert-butylphenyl).

6.   A composition as claimed in any one of the preceding claims and further including a second primary hindered phenolic anti-oxidant and/or a secondary anti-oxidant in a concentration of between 20 and 5000 ppm.

7.   A composition  as claimed in claim 6 wherein the second primary hindered phenolic anti-oxidant comprises:

p-hydroxyphenylcyclohexane; di-p-hydroxyphenylcyclohexane dicresylolpropane; tertiary butyl para cresol; 2,6-di-tert-butyl-p-cresol; 2,4,6-tri-tert-butylphenol; octadecyl-3-(3,5-di-tert-butyl-4-hydroxyphenyl)propionate; tetra bis[methylene 3-(3',5'-di-tert-butyl-4'-hydroxyphenyl)propionate]methane; 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; and bis-[3,3-bis-4'-hydroxy-3'-tert-butyl-phenyl)-butanoic acid]-glycol ester, condensation products of dialkylphenols with formaldehyde, reaction products of phenol with styrene, 1,1'-methylene-bis(4-hydroxy-3,5-tert-butylphenol), 2,2'-methylene-bis-(4-methyl-6-tert-butylphenol), 2,6-(2-tert-butyl-4-methyl-6-methylphenol)-p-cresol, phenylethyl-pyrocatechol, phenolisopropylpyrocatechol, 1,1,3-tris(2'-methyl-5'-t-butyl-4-hydroxy phenol)butane, 2,2-methylene-bis[6-(-)-methylcyclohexyl)-4-methylphenol], 1,3,5-trimethyl-2,4,6-tris-(3',5'-di-t-butyl-4-hydroxybenzyl)benzene and ⟨-naphthol; and sulfur containing compounds such as 2,2'-thio-bis-(4-methyl-6-tert-butylphenol), or 4-4'-thio-bis-(3-methyl-6-tert-butylphenyl).

8. A composition as claimed in any one of the preceding claims wherein the olefin polymer is an ethylene copolymer selected from an ethylene/propylene copolymer, ethylene/butene-1 copolymer, ethylene/pentene-1 copolymer, ethylene/4-methyl-pentene-1 copolymer, ethylene/hexene-1 copolymer, or an ethylene/octene-1 copolymer.

9. A composition as claimed in any one of claims 1 to 7 wherein the olefin polymer is an ethylene interpolymer which includes two or more of the following monomers: propylene, butene-1, pentene-1, hexene-1, 4-methyl-pentene-1 and octene-1.

10. A composition as claimed in any one of claims 1 to 7 wherein the olefin polymer is a propylene interpolymer which includes two or more of the following monomers: ethylene, butene-1, pentene-1, hexene-1, 4-methyl-pentene-1 and octene-1.

11. A composition as claimed in any one of claims 1 to 7 wherein the olefin polymer is a butene-1 interpolymer which includes two or more of the following monomers: ethylene, propylene, pentene-1, hexene-1, 4-methyl-pentene-1 and octene-1.

12. A composition as claimed in any one of claims 1 to 7 wherein the olefin polymer is an ethylene polymer, wherein the chloride residue concentration is between 5 and 50 ppm, and the metallic phenolate salt concentration is between 20 and 1000 ppm.

13. A composition as claimed in any one of claims 1 to 7 wherein the olefin polymer is propylene polymer or butene polymer, wherein the chloride residue concentration is between 10 and 500 ppm, and the metallic phenolate salt concentration is between 200 and 10,000 ppm.

14. A composition as claimed in any one of the preceding claims wherein the metallic phenolate salt is present in an amount at least 3 times the amount of chloride catalyst residue present.

15. A composition as claimed in claim 14 wherein the metallic phenolate salt to chloride catalyst residue ratio is greater than 10 to 1.

16. A composition as claimed in any one of the preceding claims and further including an organic slip agent and an anti-block agent.

17. A masterbatch concentrate which, when admixed with a transition metal-catalyzed olefin polymer containing halide residue in a letdown ratio of between 5 and 100 to 1 by weight of the catalyzed olefin polymer to the masterbatch concentrate, provides a film-forming composition capable of being extruded into a film which is essentially free from gel-streaking and pinstriping, which masterbatch concentrate comprises: between 40% and 98% by weight of an olefin polymer compatible with the transition metal-catalyzed olefin polymer; between 0.1% and 5% by weight of a metallic phenolate salt derived from a first primary hindered phenolic anti-oxidant; the metallic phenolate being an alkali metal phenolate salt, an alkaline earth metal phenolate salt, a zinc phenolate salt, or a mixture thereof; and between 2% and 48% by weight of an inorganic anti-block compound.

18. A masterbatch concentrate as claimed in claim 17 wherein the olefin polymer is a Ziegler-Natta-catalyzed olefin polymer containing chloride catalyst residue.

19. A masterbatch concentrate as claimed in claim 17 or claim 18 wherein the alkali metal of the metallic phenolate salt is sodium, potassium, or a mixture thereof.

20. A masterbatch concentrate as claimed in claim 17 or claim 18 wherein the alkaline earth metal of the metallic phenolate salt is calcium, magnesium, barium, or a mixture thereof.

21. A masterbatch concentrate as claimed in any one of claims 17 to 20 wherein the first primary hindered phenolic oxidant comprises: p-hydroxyphenylcyclohexane; di-p-hydroxyphenylcyclohexane dicresylolpropane; tertiary butyl para cresol; 2,6-di-tert-butyl-p-cresol; 2,4,6-tri-tert-butylphenol; octadecyl-3-(3,5-di-tert-butyl-4-hydroxyphenyl)propionate; tetra bis[methylene 3-(3',5'-di-tert-butyl-4'-hydroxyphenyl)propionate]methane; 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; bis-[3,3-bis-4'-hydroxy-3'-tert-butyl-phenyl)-butanoic acid]-glycol ester; condensation products of dialkylphenols with formaldehyde; reaction products of phenol with styrene; 1,1'-methylene-bis(4-hydroxy-3,5-tert-butylphenol); 2,2'-methylene-bis-(4-methyl-6-tert-butylphenol); 2,6-(2-tert-butyl-4-methyl-6-methylphenol)-p-cresol; phenylethyl-pyrocatechol; phenolisopropylpyrocatechol; 1,1,3-tris(2'-methyl-5'-t-butyl-4-hydroxy phenol)butane; 2,2-methylene-bis[6-(methylcyclohexyl)-4-methylphenol]; 1,3,5-trimethyl-2,4,6-tris-(3',5'-di-t-butyl-4-hydroxybenzyl)benzene and α-naphthol; 2,2'-thio-bis-(4-methyl-6-tert-butylphenol); or 4-4'-thio-bis-(3-methyl-6-tert-butylphenyl).

22.    A masterbatch concentrate as claimed in any one of claims 17 to 21 and further including between 0.1% and 5% by weight of a second primary hindered phenolic anti-oxidant and/or a secondary anti-oxidant.

23.    A masterbatch concentrate as claimed in claim 22 wherein the second primary hindered phenolic anti-oxidant comprises: p-hydroxyphenylcyclohexane; di-p-hydroxyphenylcyclohexane dicresylolpropane; tertiary butyl para cresol; 2,6-di-tert-butyl-p-cresol; 2,4,6-tri-tert-butylphenol; octadecyl-3-(3,5-di-tert-butyl-4-hydroxyphenyl)propionate; tetra bis[methylene 3-(3',5'-di-tert-butyl-4'-hydroxyphenyl)propionate]methane; 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; and bis-[3,3-bis-4'-hydroxy-3'-tert-butyl-phenyl)-butanoic acid]-glycol ester, condensation products of dialkylphenols with formaldehyde, reaction products of phenol with styrene, 1,1'-methylene-bis(4-hydroxy-3,5-tert-butylphenol), 2,2'-methylene-bis-(4-methyl-6-tert-butylphenol), 2,6-(2-tert-butyl-4-methyl-6-methylphenol)-p-cresol, phenylethyl-pyrocatechol, phenolisopropylpyrocatechol, 1,1,3-tris(2'-methyl-5'-t-butyl-4-hydroxy phenol)butane, 2,2-methylene-bis[6-(e)-methylcyclohexyl)-4-methylphenol], 1,3,5-trimethyl-2,4,6-tris-(3',5'-di-t-butyl-4-hydroxybenzyl)benzene and α-naphthol; and sulfur containing compounds such as 2,2'-thio-bis-(4-methyl-6-tert-butylphenol), or 4-4'-thio-bis-(3-methyl-6-tert-butylphenyl).

24. A masterbatch concentrate as claimed in any one of claims 17 to 23 wherein the olefin polymer is an ethylene copolymer selected from an ethylene/propylene copolymer, ethylene/butene-1 copolymer, ethylene/ pentene-1 copolymer, ethylene/4-methyl-pentene-1 copolymer, ethylene/hexene-1 copolymer, or an ethylene/octene-1 copolymer.

25. A masterbatch concentrate as claimed in any one of claims 17 to 23 wherein the olefin polymer is an ethylene interpolymer which includes two or more of the following monomers: propylene, butene-1, pentene-1, hexene-1, 4-methyl-pentene-1 and octene-1.

26. A masterbatch concentrate as claimed in any one of claims 17 to 23 wherein the olefin polymer is a propylene interpolymer which includes two or more of the following monomers: ethylene, butene-1, pentene-1, hexene-1, 4-methyl-pentene-1 and octene-1.

27. A masterbatch concentrate as claimed in any one of claims 17 to 23 wherein the olefin polymer is a butene-1 interpolymer which includes two or more of the following monomers: ethylene, propylene, pentene-1, hexene-1, 4-methyl-pentene-1 and octene-1.

28. A process for extruding a film-forming olefin polymer-based composition into film, which composition comprises a transition metal-catalyzed film-grade olefin polymer which contains a halide catalyst residue in the range of between 5 and 500 ppm, which composition is susceptible to gel-streaking and pinstriping during the formation of the film in the presence of a hindered phenolic anti-oxidant in the range of between 20 and 5000 ppm, which process comprises: extruding the composition into the film in the presence of a metallic salt derived from a primary hindered phenolic anti-oxidant, wherein the metallic phenolate salt is present in a concentration sufficient to neutralize the halide catalyst residue in the composition, and wherein metallic phenolate salt is an alkali metal phenolate salt, an alkaline earth metal phenolate salt, a zinc phenolate salt or a mixture thereof.

29. A process for extruding a film-forming olefin polymer-based composition into film, which film is essentially devoid of gel-streaking and pinstriping, which process comprises: extruding, under an extrusion temperature of at least from 135°C to 340°C and a throughput time for the olefin polymer-based composition in the extruding equipment of from 0.2 to 10 minutes, an extrudable composition which comprises, film-grade olefin polymer containing a chloride catalyst residue in the range of between 5 and 500 ppm, based on the olefin polymer, and, based upon the olefin polymer, a metallic phenolate salt derived from a primary hindered phenolic anti-oxidant in a concentration between 20 and 5000 ppm, wherein the metallic phenolate salt is present in a concentration sufficient to neutralize the chloride catalyst residue, the metallic phenolate salt being an alkali metal phenolate salt, an alkaline earth metal phenolate salt, zinc phenolate salt, or a mixture thereof; and wherein the film-grade olefin polymer is a material which is susceptible to gel-streaking and pinstriping under the said extrusion conditions in the presence of a hindered phenolic anti-oxidant.

30. A process for slot casting or blown film extruding a transition metal-catalyzed film-grade olefin polymer composition containing a halide catalyst residue in the range of from 5 to 500 ppm which residue causes corrosion of equipment during processing of the film, which process comprises: slot casting or extruding the composition into a film in the presence of a metallic phenolate salt derived from a primary hindered phenolic anti-oxidant, wherein the metallic

0068851

phenolate salt is present in a concentration sufficient to neutralize the chloride catalyst residue, the metallic phenolate salt being an alkali metal phenolate salt, an alkaline earth metal phenolate salt, a zinc phenolate salt, or a mixture thereof.

31. A process for injection or blow molding a transition metal-catalyzed molding-grade olefin polymer composition containing a halide catalyst residue in the range of 5 to 500 ppm which residue causes corrosion of equipment during the fabrication of a molded article, which process comprises: molding the composition into a molded article, under heat and pressure, in the presence of a metallic phenolate salt derived from a primary hindered phenolic anti-oxidant, wherein the metallic phenolate salt is present in a concentration sufficient to neutralize the chloride catalyst residue, the metallic phenolate salt being an alkali metal phenolate salt, an alkaline earth metal phenolate salt, a zinc phenolate salt, or a mixture thereof.

32. A process as claimed in any one of claims 28 to 31 wherein the olefin polymer is a Ziegler-Natta-catalyzed film-or molding-grade olefin polymer which contains a chloride catalyst residue.

MGB/SJW/DR/EA640

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A,D | CA-A- 961 998 (UNION CARBIDE) <br> * Claims * <br><br> --- | 1-32 | C 08 K 5/13 <br> C 08 L 23/02 <br> C 08 F 6/02 |
| A,D | US-A-4 013 622 (J. DEJUNEAS et al.) <br> * Claims * <br><br> --- | 1-32 | |
| A | DE-A-1 770 389 (BASF AG) <br> * Claims * <br><br> ----- | 1 | |

|  |  |
|---|---|
| | TECHNICAL FIELDS SEARCHED (Int. Cl. 3) <br><br> C 08 F <br> C 08 K <br> C 08 L |

The present search report has been drawn up for all claims

| Place of search | Date of completion of the search | Examiner |
|---|---|---|
| THE HAGUE | 06-09-1982 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82